# EUROPEAN PATENT SPECIFICATION

(11) **EP 2 771 398 B1**
(45) Date of publication and mention of the grant of the patent: **20.10.2021**
(21) Application number: 12844112.8
(22) Date of filing: 25.07.2012
(51) Int. Cl.: C08L 9/06, C08L 17/00, C08L 91/00, C08L 91/06

(54) **SILICA-FILLED RUBBER COMPOSITION AND METHOD FOR MAKING THE SAME**
KIESELSÄUREGEFÜLLTE KAUTSCHUKZUSAMMENSETZUNG UND HERSTELLUNGSVERFAHREN DAFÜR
COMPOSITION DE CAOUTCHOUC CHARGÉE AVEC DE LA SILICE ET SON PROCÉDÉ DE PRÉPARATION

(30) Priority: 24.10.2011 US 201161550474 P
(43) Date of publication of application: 03.09.2014
(73) Proprietor: Bridgestone Americas Tire Operations, LLC, Nashville, TN 37201 (US)
(72) Inventor: DUNLAVY, Maryangel, Ravenna, Ohio 44266 (US)
(74) Representative: Adam, Holger
(86) International application number: PCT/US2012/048125
(87) International publication number: WO 2013/062648

(56) References cited:
- EP-A1- 2 679 626
- US-A- 3 938 574
- US-A- 5 534 574
- US-A- 5 939 493
- US-A- 6 021 831
- US-A1- 2002 077 408
- US-A1- 2002 115 767
- US-A1- 2003 105 242
- US-A1- 2004 132 880
- US-A1- 2004 192 852
- US-B1- 6 242 522
- US-B1- 7 671 132
- US-B2- 7 351 763
- M.J.R. LOADMAN: "THE GLASS TRANSITION TEMPERATURE OF NATURAL RUBBER", JOURNAL OF THERMAL ANALYSIS, vol. 30, no. 4, July 1985 (1985-07), pages 929-941, XP002749545, U.K./HUNGARY DOI: 10.1007/BF01913321
- PHAM THI HAO ET AL: "Study of two types of styrene butadiene rubber in tire tread compounds", POLYMER TESTING, vol. 20, 2001, pages 539-544, XP002751152, NL

## Description

### FIELD OF THE DISCLOSURE

This disclosure generally relates to a silica-filled rubber composition, and a method of making the same.

### BACKGROUND

Reinforcing fillers, such as carbon black and silica, are commonly introduced to confer certain favorable mechanical properties to cured rubber compositions. When used alone or in combination with carbon black, silica reinforcement may provide improved traction characteristics and rolling resistance when applied in tire components.

Rubber compositions containing silica are generally prepared in at least two mixing stages - at least one preparatory mixing step in which polymers, fillers, coupling agents, plasticizers, and the like are kneaded together, and a final mixing step in which vulcanization agents such as curatives and vulcanization accelerators are added. In practice, addition of vulcanization accelerators in any preparatory mixing stage is generally disfavored to avoid premature vulcanization.

Among the prior art, US 5534574 A discloses a rubber composition comprised of elastomer, silica, a silica coupler, 2-mercaptobenzothiazole and, optionally, carbon black, in which the silica, silica coupler and at least a portion of the 2-mercaptobenzothiazole are added in a non-productive mix stage. Pneumatic tires having treads comprised of such rubber composition are provided. US 2003/105242 A1 directs to a rubber composition based on a diene elastomer, a reinforcing inorganic filler, and a coupling system, wherein the coupling system comprises a polysulfurized alkoxysilane ("PSAS") coupling agent (inorganic filler/diene elastomer) associated with an aldimine having the general formula R-CH=N-R and a guanidine derivative. Tires and semi-finished products for tires comprising such rubber composition are also provided.

### SUMMARY

Disclosed is a method of preparing a rubber composition comprising:
a. blending in at least one preparatory mixing step
   (i) at least one synthetic rubbery polymer including styrene-butadiene rubber (SBR) and optionally at least one natural rubbery polymer,
   (ii) a silica filler,
   (iii) a silica coupling agent selected from one or more organo silane polysulfides, and
   (iv) 1,3-diphenylguanidine (DPG) as vulcanization accelerator; and
b. subsequently blending therewith in a final mixing step a sulfur curative, wherein the average glass transition temperature of the polymer(s) is -55° C or less.

Also disclosed is a rubber composition produced by a method comprising:
a. blending in at least one preparatory mixing step
   (i) at least one synthetic rubbery polymer including styrene-butadiene rubber (SBR) and optionally at least one natural rubbery polymer,
   (ii) a silica filler,
   (iii) a silica coupling agent selected from one or more organo silane polysulfides, and
   (iv) 1,3-diphenylguanidine (DPG) as vulcanization accelerator; and
b. subsequently blending therewith in a final mixing step a sulfur curative, wherein the average glass transition temperature of the polymer(s) is -55° C or less.

Further disclosed is a tire tread comprising a rubber composition produced by a method comprising:
a. blending in at least one preparatory mixing step
   (i) at least one synthetic rubbery polymer including styrene-butadiene rubber (SBR) and optionally at least one natural rubbery polymer,
   (ii) a silica filler,
   (iii) a silica coupling agent selected from one or more organo silane polysulfides, and
   (iv) 1,3-diphenylguanidine (DPG) as vulcanization accelerator; and
b. subsequently blending therewith in a final mixing step a sulfur curative, wherein the average glass transition temperature of the polymer(s) is -55° C or less.

Other aspects of the present disclosure will be apparent to the ordinarily skilled artisan from the description that follows. To assist in understanding the description of various embodiments that follow, certain definitions are provided immediately below. These are intended to apply throughout unless the surrounding text explicitly indicates a contrary intention:
"polymer" means the polymerization product of one or more monomers and is inclusive of homo-, co-, ter-, tetra-polymers, etc.;
"copolymer" means a polymer that includes mer units derived from two reactants, typically monomers, and is inclusive of random, block, segmented, graft, gradient, etc., copolymers; and
"phr" means parts by weight of a referenced material per 100 parts by weight rubber, and is a recognized term by those having skill in the rubber compounding art.

The terms "rubber composition" and "rubber compound" may be used interchangeably.

### DETAILED DESCRIPTION

Disclosed is a method of preparing a rubber composition comprising the steps of (a) blending in at least one preparatory mixing step at least synthetic rubbery polymer including styrene-butadiene rubber (SBR) and optionally at least one natural rubbery polymer, a silica filler, a silica coupling agent selected from one or more organo silane polysulfides, and 1,3-diphenylguanidine (DPG) as vulcanization accelerator; and (b) subsequently blending therewith in a final mixing step a sulfur curative, wherein the average glass transition temperature of the polymer(s) is -55° C or less.

The rubbery polymer comprises at least one natural or synthetic rubbery polymer that is suitable for use in a cap ply rubber composition. Examples of rubbery polymers that may be used in the compositions described herein include natural rubber, synthetic polyisoprene rubber, styrene-isoprene rubber, styrene- isoprene-butadiene rubber, butadiene-isoprene-styrene terpolymer, butadiene-isoprene rubber, polybutadiene, butyl rubber, neoprene, acrylonitrile-butadiene rubber (NBR), silicone rubber, the fluoroelastomers, ethylene acrylic rubber, ethylene-propylene rubber, ethylene- propylene terpolymer (EPDM), ethylene vinyl acetate copolymer, epichlorohydrin rubber, chlorinated polyethylene-propylene rubbers, chlorosulfonated polyethylene rubber, hydrogenated nitrile rubber, and terafluoroethylene-propylene rubber. A mixture of rubbery polymers may be used.

The rubber composition contains a silica filler. Examples of reinforcing silica fillers which can be used include wet silica (hydrated silicic acid), dry silica (anhydrous silicic acid), calcium silicate, and the like. Among these, precipitated amorphous wet- process, hydrated silicas are preferred. Silica can be employed in an amount of about 1 to about 100 phr, in an amount of about 5 to about 80 phr, or alternatively in an amount of about 30 to about 80 phr. The useful upper range is limited by the high viscosity imparted by fillers of this type. Some of the commercially available silicas which can be used include, but are not limited to, HiSil® 190, HiSil® 210, HiSil® 215, HiSil® 233, HiSil® 243, and the like, produced by PPG Industries (Pittsburgh, Pa.). A number of useful commercial grades of different silicas are also available from DeGussa Corporation (e.g., VN2, VN3), Rhone Poulenc (e.g., Zeosil® 1165MPO), and J. M. Huber Corporation.

In addition to the silica filler, carbon black may also be added to the rubber composition. The carbon black is typically added in at least one preparatory mixing step.

Carbon black, when present, may be used in an amount of about 1 to about 200 phr, in an amount of about 5 to about 100 phr, or alternatively in an amount of about 30 to about 80 phr. Suitable carbon blacks include commonly available, commercially-produced carbon blacks, but those having a surface area of at least 20 m²/g, or preferably, at least 35 m²/g up to 200 m²/g or higher are preferred. Among useful carbon blacks are furnace blacks, channel blacks, and lamp blacks. A mixture of two or more carbon blacks can be used. Exemplary carbon blacks include, but are not limited to, N-110, N-220, N-339, N-330, N- 352, N-550, N-660, as designated by ASTM D-1765-82a.

If the rubber composition contains a blend of silica filler and carbon black, the ratio of silica to carbon black may range from about 0.1:1 to about 10:1, or from about 1:1 to about 10:1, or from about 5:1 to about 10:1.

The surface of the carbon black and/or silica may optionally be treated or modified to improve the affinity to particular types of polymers. Such surface treatments and modifications are well known to those skilled in the art.

Additional fillers may also be utilized, including but not limited to, mineral fillers, such as clay, talc, aluminum hydrate, aluminum hydroxide and mica. The foregoing additional fillers are optional and can be utilized in varying amounts from about 0.5 phr to about 40 phr.

The total amount of filler may be from about 1 to about 200 phr, alternatively from about 5 to about 100 phr, from about 10 phr to about 30 phr, from about 30 to about 80 phr, or from about 40 to about 70 phr.

A silica coupling agent is used to couple the silica to the rubbery polymer. Numerous coupling agents are known, including organo silane polysulfides. Any organosilane polysulfide may be used. Suitable organosilane polysulfides include 3,3'-bis(trimethoxysilylpropyl)disulfide, 3,3'-bis(triethoxysilylproplfide, 3,3'-bis(triethoxysilylpropyl)tetrasulfide, 3,3'-bis(triethoxysilylpropyl)octasulfide, 3,3'-bis(trimethoxysilylpropyl)tetrasulfide, 2,2'-bis(triethoxysilylethyl)tetrasulfide, 3,3'-bis(trimethoxysilylpropyl)trisulfide, 3,3'-bis(triethoxysilylpropyl)trisulfide, 3,3'-bis(tributoxysilylpropyl)disulfide, 3,3'-bis(trimethoxysilylpropyl)hexasulfide, 3,3'-bis(trimethoxysilylpropyl)octasulfide, 3,3'-bis(trioctoxysilylpropyl)tetrasulfide, 3,3'-bis(trihexoxysilylpropyl)disulfide, 3,3'-bis(tri-2"-ethylhexoxysilylpropyl)trisulfide, 3,3'-bis(triisooctoxysilylpropyl)tetrasulfide, 3,3'-bis(tri-t-butoxysilylpropyl)disulfide, 2,2'-bis(methoxydiethoxysilylethyl)tetrasulfide, 2,2'-bis(tripropoxysilylethyl)pentasulfide, 3,3'-bis(tricycloneoxysilylpropyl)tetrasulfide, 3,3'-bis(tricyclopentoxysilylpropyl)trisulfide, 2,2'-bis(tri-2"-methylcyclohexoxysilylethyl)tetrasulfide, bis(trimethoxysilylmethyl)tetrasulfide, 3-methoxyethoxypropoxysilyl 3'-diethoxybutoxy-silylpropyl tetrasulfide, 2,2'-bis(dimethylmethoxysilylethyl)disulfide, 2,2'-bis(dimethylsecbutoxysilylethyl) trisulfide, 3,3'-bis(methylbutylethoxysilylpropyl)tetrasulfide, 3,3'-bis(di t-butylmethoxysilylpropyl) tetrasulfide, 2,2'-bis(phenylmethylmethoxysilylethyl)trisulfide, 3,3'-bis(diphenyl isopropoxysilylpropyl)tetrasulfide, 3,3'-bis(diphenylcyclohexoxysilylpropyl)disulfide, 3,3'-bis(dimethylethylmercaptosilylpropyl)tetrasulfide, 2,2'-bis(methyldimethoxysilylethyl)trisulfide, 2,2'-bis(methyl ethoxypropoxysilylethyl)tetrasulfide, 3,3'-bis(diethylmethoxysilylpropyl)tetrasulfide, 3,3'- bis(ethyldi-secbutoxysilylpropyl)disulfide, 3,3'-bis(propyldiethoxysilylpropyl) disulfide, 3,3'- bis(butyldimethoxysilylpropyl)trisulfide, 3,3'-bis(phenyldimethoxysilylpropyl)tetrasulfide, 3'-trimethoxysilylpropyl tetrasulfide, 4,4'-bis(trimethoxysilylbutyl)tetrasulfide, 6,6'- bis(triethoxysilylhexyl)tetrasulfide, 12,12'-bis(triisopropoxysilyl dodecyl)disulfide, 18,18'- bis(trimethoxysilyloctadecyl)tetrasulfide, 18,18'-bis(tripropoxysilyloctadecenyl)tetrasulfide, 4,4'-bis(trimethoxysilyl-buten-2-yl)tetrasulfide, 4,4'-bis(trimethoxysilylcyclohexylene)tetrasulfide, 5,5'-bis(dimethoxymethylsilylpentyl)trisulfide, 3,3'-bis(trimethoxysilyl -2-methylpropyl)tetrasulfide and 3,3'-bis(dimethoxyphenylsilyl-2- methylpropyl)disulfide.

Suitable organoalkoxymercaptosilanes (not according to the invention) include triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane. Such organoalkoxymercaptosilanes may be capped with a blocking group, i.e., the mercapto hydrogen atom is replaced with another group. A representative example of a capped organoalkoxymercaptosilane coupling agent is a liquid 3-octanoylthio-1-propyltriethoxysilane, commercially available as NXT™ Silane from Momentive Performance Materials Inc.

Mixtures of various organosilane polysulfide compounds and organoalkoxymercaptosilanes can be used (not according to the invention).

The amount of coupling agent in the rubber composition is the amount needed to produce acceptable results, which is easily determined by one skilled in the art. The amount of coupling agent is typically based on the weight of the silica in the composition, and may be from about 0.1% to about 20% by weight of silica, from about 1% to about 15% by weight of silica, or alternatively from about 1% to about 10% by weight of silica.

Other ingredients that may be added to the rubber composition include oils, waxes, scorch inhibiting agents, tackifying resins, reinforcing resins, fatty acids such as stearic acid, and peptizers. These ingredients are known in the art, and may be added in appropriate amounts based on the desired physical and mechanical properties of the rubber composition.

A vulcanizing agent is added to the rubber composition. Suitable vulcanizing agents are known in the art, and may be added in appropriate amounts based on the desired physical, mechanical, and cure rate properties of the rubber composition. Examples of vulcanizing agents include sulfur and sulfur donating compounds. The amount of the vulcanizing agent used in the rubber composition may, in certain embodiments, be from about 0.1 to about 10 phr, or from about 1 to about 5 parts by weight per 100 phr.

The total amount of vulcanization accelerator(s) used in the rubber composition may be from about 0.1 to about 10 phr or from about 1 to about 5 phr.

The rubber composition may be formed by mixing the ingredients together by methods known in the art, such as, for example, by kneading the ingredients together in a Banbury mixer.

As mentioned herein above, the rubber composition is formed by mixing the ingredients together in at least two mixing steps: at least one preparatory mixing step and a final mixing step. A preparatory mixing step is one in which no vulcanization agent, such as sulfur, is added. In the preparatory mixing step(s), the ingredients may be mixed to a temperature of about 140° C to about 190° C, or to a temperature of about 150° C to about 180° C, or alternatively to a temperature of about 160° C to about 175° C. If more than one preparatory mixing step is utilized, the temperatures of the preparatory mixing steps may be the same or different.

A final mixing step is one in which a vulcanizing agent, such as sulfur, is added. The final mixing step may further contain vulcanization accelerators. The final mixing step may be mixed to a temperature below the vulcanization temperature in order to avoid unwanted pre-cure of the rubber composition. Therefore, the temperature of the productive mixing stage should not exceed about 120°C and is typically about 40° C to about 120° C, or about 60° C to about 110° C and, especially, about 75° C to about 100° C.

The composition is preferably allowed to cool to a temperature of 50° C or lower between individual mixing steps.

One aspect of this disclosure is the fact that at least one vulcanization accelerator is added to the rubber composition during a preparatory mixing step. Suitable vulcanization accelerators that may be added during a preparatory mixing step include the vulcanization accelerator mentioned herein above. In one embodiment, the vulcanization accelerator that is added in a preparatory mixing step is diphenyl guanidine (DPG).

The preparatory mixing step in which a vulcanization accelerator is added may be the same mixing step in which the polymer(s), silica, silica coupling agent, oil(s), and other ingredients are added. In one embodiment, the preparatory mixing step containing the vulcanization accelerator is a mixing step in which only a vulcanization accelerator is added, and is conducted after all polymer(s), silica, and silica coupling agent has been added. In another embodiment, all processing aids, stearic acid, and antidegredants such as N-(1,3-dimethylbutyl)-N'-phenyl-p-phenylene-diamine (6PPD), are added in a subsequent mixing stage to the preparatory mixing stage containing a vulcanization accelerator.

The amount of vulcanization accelerator added during the preparatory mixing step may vary, and may depend on the amount of silica filler and silica coupling agent. The amount of vulcanization accelerator added during a preparatory mixing stage may be from about 0.01 to about 5 phr, or from about 0.01 to about 3 phr, or from about 0.1 to about 1 phr. In one embodiment, at least one vulcanization accelerator is added during a preparatory mixing step, and at least one vulcanization accelerator is added during the final mixing stage. The vulcanization accelerator added during the final mixing stage may be the same as or different from the accelerator added during the preparatory mixing stage. In another embodiment, all of the vulcanization accelerators may be added during a preparatory mixing stage, meaning no vulcanization accelerator is added during the final mixing stage. The total amount of vulcanization accelerator(s) used in the rubber composition may be from about 0.1 to about 10 phr or from about 1 to about 5 phr.

Another aspect of this disclosure is that the average glass transition temperature (Tg) of the polymer(s) is -55° C or less. The Tg is determined by a differential scanning calorimeter (DSC) at a rate of temperature increase of 20° C/min and calculated by the midpoint method, a method which is well known to persons skilled in the art. The average Tg of the polymers is a weighted average, thus accounting for the amount of each polymer in the rubber composition. For example, a rubber composition containing 70 phr of a polymer having a Tg of -20° C and 30 phr of a polymer having a Tg of -60° C has an average polymer Tg of -32° C (((70 phr X - 20° C)+ (30 phr X -60° C))/100 phr). In one embodiment, the average Tg of the polymer(s) is - 60° C or less.

Without intending to be bound by theory, it is believed that the addition of a vulcanization accelerator in a preparatory mixing stage catalyzes the silanization reaction between the silica coupling agent and the rubbery polymer. It has unexpectedly been found that the effects of the improved silanization reaction are impacted by the average Tg of the polymer(s) in the rubber composition. For example, if the rubber composition is used as a tire tread composition, it has been found that when the average Tg of the polymer(s) in the rubber composition is -55° C or less, the snow traction of the tread may be improved by the addition of a vulcanization accelerator in a preparatory mixing step.

The rubber composition formed according to the disclosure herein is particularly useful as a tire tread rubber composition. However, in certain embodiments, it may be used as another tire component, such as a sidewall, bead filler, undertread, or a coating for a carcass ply. Additionally, other rubber articles may be formed from the rubber composition of the disclosure, such as an air spring component.

The present disclosure will be described in more detail with reference to the following examples. The following examples are presented for purposes of illustration.

### EXAMPLES

Eight rubber compositions were prepared from the ingredients shown in Table 1. All amounts shown are in phr. Samples A, B, C, and D were mixed in two mixing steps in a Banbury type mixer - a preparatory mixing step and a final mixing step. The ingredients in the preparatory mixing stage were mixed to a temperature of about 175° C before being dropped from the mixer, while the ingredients in the final mixing step were mixed to a temperature of about 110° C before being dropped from the mixer.

Samples A', B', C', and D' were mixed in three mixing stages - two preparatory mixing steps and a final mixing step. The ingredients in each preparatory mixing step were mixed to a temperature of about 175° C before being dropped from the mixer, while the ingredients in the final mixing step were mixed to a temperature of about 110° C before being dropped from the mixer.

**Table 1**

| **First Preparatory Mixing Step** | A | A' | B | B' | C | C' | D | D' |
|---|---|---|---|---|---|---|---|---|
| SBR (-22° C Tg) | 60 | 60 | 40 | 40 | 29.5 | 29.5 | 17.5 | 17.5 |
| SBR (-69° C Tg) | 40 | 40 | 60 | 60 | 70.5 | 70.5 | 82.5 | 82.5 |
| Devulcanized Rubber | 5 | 5 | 5 | 5 | 5 | 5 | 5 | 5 |
| Carbon Black | 7 | 7 | 7 | 7 | 7 | 7 | 7 | 7 |
| Silica | 63 | 63 | 63 | 63 | 63 | 63 | 63 | 63 |
| 3,3'-bis(triethoxysilyipropyl)disulfide | 5.4 | 5.4 | 5.4 | 5.4 | 5.4 | 5.4 | 5.4 | 5.4 |
| Oil | 42.5 | 42.5 | 42.5 | 42.5 | 42.5 | 42.5 | 42.5 | 42.5 |
| Wax | 1.5 | 1.5 | 1.5 | 1.5 | 1.5 | 1.5 | 1.5 | 1.5 |
| Stearic Acid | 1 | 0 | 1 | 0 | 1 | 0 | 1 | 0 |
| N-(1,3 Dimethylbutyl)-N'-Phenyl-P-Phenylene-Diamine | 0.95 | 0 | 0.95 | 0 | 0.95 | 0 | 0.95 | 0 |

| **Second Preparatory Mixing Step** | | | | | | | | |
|---|---|---|---|---|---|---|---|---|
| N,N'-Diphenylguanidine | 0 | 1 | 0 | 1 | 0 | 1 | 0 | 1 |

| **Final Mixing Step** | | | | | | | | |
|---|---|---|---|---|---|---|---|---|
| Sulfur | 1.6 | 1.6 | 1.6 | 1.6 | 1.6 | 1.6 | 1.6 | 1.6 |
| N,N'-Diphenylguanidine | 1 | 0.4 | 1 | 0.4 | 1 | 0.4 | 1 | 0.4 |
| N-Cyclohexyl-2-benzothiazolesulfenamide | 1.4 | 1.4 | 1.4 | 1.4 | 1.4 | 1.4 | 1.4 | 1.4 |
| 2,2'-Dithiobis(benzothiazole) | 1.4 | 1.4 | 1.4 | 1.4 | 1.4 | 1.4 | 1.4 | 1.4 |
| Stearic Acid | 0 | 1 | 0 | 1 | 0 | 1 | 0 | 1 |
| Zinc Oxide | 2.5 | 2.5 | 2.5 | 2.5 | 2.5 | 2.5 | 2.5 | 2.5 |
| N-(1,3 Dimethylbutyl)-N'-Phenyl-P-Phenykne-Diamine | 0 | 0.95 | 0 | 0.95 | 0 | 0.95 | 0 | 0.95 |
| Polymerized 2,2,4-Trimethyl-1,2-dihydroquinoline | 0.22 | 0.22 | 0.22 | 0.22 | 0.22 | 0.22 | 0.22 | 0.22 |

The rubber compositions had the properties shown in Table 2. Dynamic viscoelastic mechanical property determinations for E' and tangent delta were made by temperature sweep tests conducted at a frequency of 52 Hz using 0.2% strain for temperatures from -50°C to -6°C and using 1.0% strain for temperatures from -5°C to 60°C. The specimens used for dynamic viscoelastic testing were cured for 15 minutes at 170° C, and had the following dimensions: 40 mm long, 4.7 mm wide, and 2 mm thick.

**Table 2**

| | A | A' | B | B' | C | C' | D | D' |
|---|---|---|---|---|---|---|---|---|
| Average Tg of Polymers (° C) | -40.8 | -40.8 | -50.2 | -50.2 | -55.2 | -55.2 | -60.8 | -60.8 |
| E'@ -20° C (MPa) | 223.8 | 180.0 | 120.9 | 81.8 | 94.5 | 48.6 | 67.7 | 36.7 |
| E'@ 0° C (MPa) | 29.3 | 17.6 | 25.5 | 14.2 | 24.8 | 11.4 | 21.8 | 11.4 |
| Tangent Delta @ 0° C | 0.541 | 0.628 | 0.442 | 0.489 | 0.399 | 0.419 | 0.356 | 0.358 |
| E'@ 30° C (MPa) | 13.1 | 7.3 | 13.2 | 7.1 | 13.7 | 6.3 | 12.8 | 7.0 |
| Tangent Delta @ 30° C | 0.277 | 0.244 | 0.262 | 0.226 | 0.255 | 0.202 | 0.244 | 0.202 |
| E'@ 60° C (MPa) | 9.2 | 5.3 | 9.5 | 5.4 | 10.1 | 4.9 | 9.6 | 5.5 |
| Tangent Delta @60° C | 0.186 | 0.149 | 0.184 | 0.147 | 0.182 | 0.138 | 0.180 | 0.143 |

Table 3 shows the percent change of E' @-20° C for A' vs. A, B' vs. B, C' vs. C, and D' vs. D.

**Table 3**

| | A' vs. A | B' vs. B | C' vs. C | D' vs. D |
|---|---|---|---|---|
| %Change in E'@ -20° C | -20 | -32 | -49 | -46 |

As can be seen from Tables 2 and 3, the addition of a vulcanization accelerator in a preparatory mixing step unexpectedly has a much larger effect on the E' @ -20° C when the rubber composition has an average polymer Tg of -55° C or lower. If the rubber composition is used as a tire tread, the larger reduction in E' @ -20° Cis indicative that the addition of a vulcanization accelerator in a preparatory mixing step to a rubber composition having an average polymer Tg of -55° C or less will result in a greater improvement in snow traction.

The description has been provided with exemplary embodiments. Modifications and alterations may occur to others upon reading and understanding the preceding detailed description.

## Claims

1. A method of preparing a rubber composition comprising:
a. blending in at least one preparatory mixing step
(i) at least one synthetic rubbery polymer including styrene-butadiene rubber (SBR) and optionally at least one natural rubbery polymer,
(ii) a silica filler,
(iii) a silica coupling agent selected from one or more organo silane polysulfides, and
(iv) 1,3-diphenylguanidine (DPG) as vulcanization accelerator; and
b. subsequently blending therewith in a final mixing step a sulfur curative, wherein the average glass transition temperature of the polymer(s) is -55°C or less.

2. The method of claim 1, wherein the at least one vulcanization accelerator is used in an amount of about 0.1 to about 10 phr, preferably about 1 to about 5 phr.

3. The method of claim 1 or claim 2, wherein the rubbery polymer comprises at least one polymer selected from the group consisting of natural rubber, synthetic polyisoprene rubber, styrene-isoprene rubber, styrene-isoprene-butadiene rubber, butadiene-isoprene-styrene terpolymer, butadiene-isoprene rubber, polybutadiene rubber, neoprene, and mixtures thereof.

4. The method of any one of claims 1-3, wherein the rubbery polymer further comprises polybutadiene rubber.

5. The method of any one of claims 1-4, wherein the silica coupling agent is 3,3'-bis(triethoxysilylpropyl)disulfide.

6. The method of any one of claims 1-5, wherein the vulcanization accelerator is added in a mixing step separately from other materials and after addition of all filler, rubbery polymer, and silica coupling agent.

7. The method of any one of claims 1-6, wherein the preparatory mixing step containing the vulcanization accelerator is mixed to a temperature of about 140°C to about 190°C, preferably about 160°C to about 175°C.

8. The method of any one of claims 1-7, wherein the at least one preparatory mixing stage further comprises carbon black.

9. The method of claim 8, wherein the silica filler is present in an amount of 5 to 80 phr, and carbon black is present in an amount of 5 to 100 phr and/or the silica filler and carbon black are present at a ratio (based on phr) of 1:1 to 10:1.

10. The method of any one of claims 1-9, wherein the at least one vulcanization accelerator is added in a second preparatory mixing step separately from other materials and after addition of (i), (ii), (iii), and any carbon black.

11. The method of any one of claims 1-10, wherein the rubber composition includes one or more of: (v) processing aid(s), (vi) fatty acid(s), and (vii) antidegradant(s), and (v), (vi) and (vii) are added in a subsequent mixing stage to the preparatory mixing stage containing the at least one vulcanization accelerator.

12. The method of claim 1, wherein the vulcanization accelerator is added in the same mixing step in which the polymer(s), silica, silica coupling agent and oil(s) are added.

## Patentansprüche

1. Verfahren zum Herstellen einer Kautschukzusammensetzung, umfassend:
a. Mischen in mindestens einem vorbereitenden Mischschritt
(i) mindestens ein synthetisches kautschukartiges Polymer einschließlich Styrol-Butadien-Kautschuk (SBR) und optional mindestens ein natürliches kautschukartiges Polymer,
(ii) einen Siliciumdioxid-Füllstoff,
(iii) einen Siliciumdioxid-Haftvermittler, ausgewählt aus einem oder mehreren Organosilanpolysulfiden, und
(iv) 1,3-Diphenylguanidin (DPG) als Vulkanisationsbeschleuniger; und
b. anschließendes Mischen eines Schwefelhärtungsmittels damit in einem abschließenden Mischschritt, wobei die durchschnittliche Glasübergangstemperatur des Polymers/der Polymere -55 °C oder weniger beträgt.

2. Verfahren nach Anspruch 1, wobei der mindestens eine Vulkanisationsbeschleuniger in einer Menge von etwa 0,1 bis etwa 10 phr, vorzugsweise etwa 1 bis etwa 5 phr, verwendet wird.

3. Verfahren nach Anspruch 1 oder Anspruch 2, wobei das kautschukartige Polymer mindestens ein Polymer umfasst, das ausgewählt ist aus der Gruppe bestehend aus Naturkautschuk, synthetischem Polyisoprenkautschuk, Styrol-Isoprenkautschuk, Styrol-Isopren-Butadien-Kautschuk, Butadien-Isopren-Styrol-Terpolymer, Butadien-Isopren-Kautschuk, Polybutadienkautschuk, Neopren und Mischungen davon.

4. Verfahren nach einem der Ansprüche 1-3, wobei das kautschukhaltige Polymer ferner Polynutadiene-Kautschuk umfasst.

5. Verfahren nach einem der Ansprüche 1-4, wobei das Siliciumdioxid-Kopplungsmittel 3,3'-Bis(triethoxysilylpropyl)disulfid ist.

6. Verfahren nach einem der Ansprüche 1-5, wobei der Vulkanisationsbeschleuniger in einem Mischschritt von anderen Materialien getrennt und nach Zugabe von dem gesamten Füllstoff, kautschukartigem Polymer und Siliciumdioxid-Kopplungsmittel zugegeben wird.

7. Verfahren nach einem der Ansprüche 1-6, wobei der vorbereitende Mischschritt, der den Vulkanisationsbeschleuniger enthält, auf eine Temperatur von etwa 140 °C bis etwa 190 °C, vorzugsweise etwa 160 °C bis etwa 175 °C, gemischt wird.

8. Verfahren nach einem der Ansprüche 1-7, wobei die mindestens eine vorbereitende Mischstufe ferner Ruß umfasst.

9. Verfahren nach Anspruch 8, wobei der Siliciumdioxid-Füllstoff in einer Menge von 5 bis 80 phr vorliegt und Ruß in einer Menge von 5 bis 100 phr vorliegt und/oder der Siliciumdioxid-Füllstoff und Ruß in einem Verhältnis (basierend auf phr) von 1:1 bis 10:1 vorliegen.

10. Verfahren nach einem der Ansprüche 1-9, wobei der mindestens eine Vulkanisationsbeschleuniger in einem zweiten vorbereitenden Mischschritt getrennt von anderen Materialien und nach Zugabe von (i), (ii), (iii) und jeglichem Ruß zugegeben wird.

11. Verfahren nach einem der Ansprüche 1-10, wobei die Kautschukzusammensetzung mindestens eines oder mehrere einschließt von: (v) Verarbeitungshilfsmittel, (vi) Fettsäure(n) und (vii) Antiabbaumittel und (v), (vi) und (vii) in einer nachfolgenden Mischstufe zu der vorbereitenden Mischstufe, die den mindestens einen Vulkanisationsbeschleuniger enthaltenden, gegeben werden.

12. Verfahren nach Anspruch 1, wobei der Vulkanisationsbeschleuniger in demselben Mischschritt zugegeben wird, in dem das/die Polymer(e), Siliciumdioxid, Siliciumdioxid-Kopplungsmittel und Öl(e) zugegeben werden.

## Revendications

1. Procédé de préparation d'une composition de caoutchouc comprenant :
a. le mélange dans au moins une étape de mélange préparatoire
(i) d'au moins un polymère caoutchouteux synthétique incluant du caoutchouc styrène-butadiène (SBR) et facultativement au moins un polymère caoutchouteux naturel,
(ii) une charge de silice,
(iii) un agent de couplage de silice choisi parmi un ou plusieurs polysulfures d'organo-silane, et
(iv) de la 1,3-diphénylguanidine (DPG) en tant qu'accélérateur de vulcanisation ; et
b. le mélange ultérieur avec celui-ci dans une étape de mélange final d'un agent de durcissement au soufre, dans lequel la température de transition vitreuse moyenne du ou des polymère(s) est de -55 °C ou moins.

2. Procédé selon la revendication 1, dans lequel l'au moins un accélérateur de vulcanisation est utilisé en une quantité d'environ 0,1 à environ 10 pcc, de préférence environ 1 à environ 5 pcc.

3. Procédé selon la revendication 1 ou la revendication 2, dans lequel le polymère caoutchouteux comprend au moins un polymère choisi dans le groupe constitué de caoutchouc naturel, caoutchouc polyisoprène synthétique, caoutchouc styrène-isoprène, caoutchouc styrène-isoprène-butadiène, terpolymère de butadiène-isoprène-styrène, caoutchouc butadiène-isoprène, caoutchouc polybutadiène, néoprène, et des mélanges de ceux-ci.

4. Procédé selon l'une quelconque des revendications 1 à 3, dans lequel le polymère caoutchouteux comprend en outre du caoutchouc polybutadiène.

5. Procédé selon l'une quelconque des revendications 1 à 4, dans lequel l'agent de couplage de silice est du 3,3'-bis(triéthoxysilylpropyl)disulfure.

6. Procédé selon l'une quelconque des revendications 1 à 5, dans lequel l'accélérateur de vulcanisation est ajouté dans une étape de mélange séparément des autres matériaux et après addition de la totalité de la charge, du polymère caoutchouteux, et de l'agent de couplage de silice.

7. Procédé selon l'une quelconque des revendications 1 à 6, dans lequel l'étape de mélange préparatoire contenant l'accélérateur de vulcanisation est mélangée à une température d'environ 140 °C à environ 190 °C, de préférence environ 160 °C à environ 175 °C.

8. Procédé selon l'une quelconque des revendications 1 à 7, dans lequel l'au moins une phase de mélange préparatoire comprend en outre du noir de carbone.

9. Procédé selon la revendication 8, dans lequel la charge de silice est présente en une quantité de 5 à 80 pcc, et du noir de carbone est présent en une quantité de 5 à 100 pcc et/ou la charge de silice et le noir de carbone sont présents à un rapport (sur une base de pcc) de 1:1 à 10:1.

10. Procédé selon l'une quelconque des revendications 1 à 9, dans lequel l'au moins un accélérateur de vulcanisation est ajouté dans une deuxième étape de mélange préparatoire séparément des autres matériaux et après addition de (i), (ii), (iii), et de noir de carbone éventuel.

11. Procédé selon l'une quelconque des revendications 1 à 10, dans lequel la composition de caoutchouc inclut un ou plusieurs parmi : (v) un ou des auxiliaire(s) de traitement, (vi) un ou des acide(s) gras, et (vii) un ou des agent(s) protecteur(s), et (v), (vi) et (vii) sont ajoutés dans une phase de mélange suivant la phase de mélange préparatoire contenant l'au moins un accélérateur de vulcanisation.

12. Procédé selon la revendication 1, dans lequel l'accélérateur de vulcanisation est ajouté dans la même étape de mélange dans laquelle le(s) polymère(s), la silice, l'agent de couplage de silice et la ou les huile(s) sont ajoutés.
